# EUROPEAN PATENT SPECIFICATION

(11) **EP 2 401 118 B1**
(45) Date of publication and mention of the grant of the patent: **12.06.2013**
(21) Application number: 09776405.4
(22) Date of filing: 28.02.2009
(51) Int. Cl.: B25J 15/00, B25J 15/02, B65G 47/91

(54) **TOOLING DEVICE FOR A MANIPULATOR**
WERZEUGVORRICHTUNG FÜR ROBOTER
DISPOSITIF D'OUTILLAGE DESTINÉ À UN MANIPULATEUR

(43) Date of publication of application: 04.01.2012
(73) Proprietor: ABB AG, 68309 Mannheim (DE)
(72) Inventor: NEGRE, Bernard, F-75013 Paris (FR); PINCHON, Gérard, F-78260 Acheres (FR); STENGEL, Gregor, 76227 Karlsruhe (DE); HUG, Kuno, 69118 Heidelberg (DE); SOETEBIER, Sven, 68526 Ladenburg (DE); WALDI, Wolfgang, 69226 Nussloch-Maisbach (DE)
(74) Representative: Partner, Lothar
(86) International application number: PCT/EP2009/001444
(87) International publication number: WO 2010/097098

(56) References cited:
- EP-A- 1 839 820
- DE-A1-102004 026 455
- ES-A1- 2 220 233
- ES-A1- 2 220 234
- FR-A- 2 909 300
- US-A1- 2004 130 085
- US-A1- 2005 008 469
- US-B1- 6 557 235

## Description

The invention relates to a tooling device which is foreseen to be connected with a manipulator, comprising a base unit and at least two manipulator modules with a first and a second end each, whereas at least one degree of freedom in movement is provided in between both ends of each manipulator module, whereas the first end is connected with the base unit, whereas a tool interface is provided at the second end and whereas the tool interfaces are moveable independently each from each other relative to the base unit.

It is known that industrial production processes, for example in the automotive industry, are often based on a wide range of different shaped types of workpieces which have to become mounted together. Due to the increasing plurality of variants of the final product also the workpieces to be mounted together are characterized by an increasing variety.

Normally an industrial production is realized by using industrial robots for the standardized production processes such as gripping a platform for a car to be mounted from a staple and moving it to an assembly area. Industrial robots are manipulators with for example 5 to 7 degrees of freedom in movement which are able to perform programmable movements within their working range that encloses for example a radius of 3m around a belonging rotary base.

Those industrial robots or other manipulators require a tooling device mounted thereon for securely gripping a workpiece. To handle the high variety of different shaped types of workpieces - such as platforms for cars - it is either possible to handle each type of workpiece with a dedicated gripper tool or to design the tooling device as flexible as possible. The required effort for changing the manipulating tool is reduced therewith.

EP1839820 B1 discloses a manipulating device for the handling of workpieces which is foreseen to be mounted on a robot. It comprises several operating modules which are stationary mounted on the same carrier unit on their one side and which provide a mounting interface for a gripper tool on their other side. To increase the flexibility of this manipulating device it is foreseen that each mounting interface is moveable within the working range of the belonging working module independently of each other.

Disadvantageously within the state of the art is that the working ranges of the operating modules do not overlap so that there is still a significant restriction in the flexibility of such a manipulating device.

Therefore it is the objective of this invention to provide a tooling device with increased flexibility.

This problem is solved by a tooling device according to claim 1.

Hence it is possible to enlarge the working range of the manipulator module in an advantageous way, for example along the whole longitudinal extension of the base unit of the tooling device. *The wording 'linear moveable' describes any movements along a straight path.* Since one additional degree of freedom in movement is provided in moving a manipulator module itself, it is possible to reduce the degrees of freedom in movement of a manipulator module by one degree so that its construction requires less effort. Preferably a manipulator module provides one degree of freedom in movement so that the second end with the tool interface is moveable along a circular path around its first end.

Of course also other constructions of a manipulator module with more than one degree of freedom in movement are thinkable. Six degrees of freedom in movement of each manipulator module would provide for example the possibility to reach each point within its linear prolonged working range in each orientation, even tough the tooling device itself is not moved.

Considering also the possible degrees of freedom in movement of a gripping tool which is preferably attached on the tool interface, the required number of degrees of freedom in movement of a manipulator module can also be decreased whereas the minimum is one.

Also the degree of freedom in movement of the manipulator wherewith the tooling device is connected has influence on the required number of degrees of freedom in movement of the manipulating modules.

In a preferred embodiment of the invention actuators are provided for linear moving the manipulator modules and/or for driving it's at least one degree of freedom in movement. Such actuators could be for example either electric motors or pneumatic or hydraulic drives. Of course a tooling device can comprise different kinds of actuators.

According to the invention at least one actuator is linear moveable together with the belonging manipulator module relative to the base unit. Preferably such an actuator is foreseen to drive the at least one degree of freedom in movement of this manipulator module where it is moveable with. The effort for mechanically transmitting the force from the actuator to the belonging manipulator module to be driven is reduced therewith. In the case of an electric motor for example a cable is guided to the actuator of the moveable manipulator module.

According to the invention at least one manipulator module is moveable on a skid along a guide rail which can assumed to be a part of the base unit. The skid itself may comprise some rolls or floating bearings for an improved movement relative to the guide rail which might assumed to be an attached part of the base unit. Dependent on the construction of the manipulator module the skid might be a part of the manipulator module itself.

According to another embodiment of the invention at least two manipulator modules are mounted on separate skids on the same guide rail moveable independently each from each other. Hereby the working ranges of those manipulator modules which are related to the same rail may overlap in a wide area so that the flexibility of the tooling device is increased once more. It is possible for example to move all those manipulator modules to the same end or to the opposed ends of the guide rail.

In another variant of the invention at least two manipulator modules are mechanically coupled and driven by a common actuator along a common guide rail. This could be realized either be mechanically coupling at least two separate skids, but it is also thinkable to mount two independent manipulator modules on the same skid. Dependent on the shape of the types of workpieces to be handled the effort for the tooling device will be reduced by this.

Following another aspect of the invention at least one actuator is coupled with a spindle drive with shaft joint. This is an advantageous method to translate a rotary movement, for example of an electric motor, into a linear movement which might be required for example for the linear movement of manipulator module along a guide rail.

According to the invention the at least one degree of freedom in movement of a manipulator module is realized by a tiltable truss structure in the shape of a parallelogram which is directly or indirectly connected to the skid. Using such a parallel truss structure the tool interface of the manipulator module is moveable along a circular path around the belonging skid. The orientation of the skid in relation to the tool interface will always be the same.

To increase the stiffness of such a manipulator module it is also (possible) that at least two tiltable truss structures in the shape of a parallelogram are foreseen in a manipulator module each, which are mechanically connected.

Considering also the linear movement of the manipulator module along a guide rail, it is possible to move a tool interface in any XY position on a virtual plane within the working range of the belonging manipulator module. Preferably a gripper tool is mounted on the tool interface whereas the gripper tool itself provides at least one additional degree of freedom in movement in upright direction to the virtual plane. So the gripper tool tip is adjustable in XYZ direction. Other moving mechanism is also thinkable such as the orthogonal overlap of three linear degrees of freedom in movement.

According to a variant of the invention at least two guide rails in parallel with at least one mounted skid each moveable independently from each other are foreseen, whereas the two guide rails overlap at least along a part of their longitudinal extension. So it becomes for example possible to arrange two parallel guide rails in opposed orientation. The working range and the flexibility of the tooling device will be once more increased therewith.

According to another embodiment of the invention at least two guide rails in parallel with at least one common moveable mounted skid are foreseen, whereas the two guide rails overlap at least along a part of their longitudinal extension. The common skid is moveable along the overlapping parts of the rails. This is useful for example to increase the mechanical stability of the tooling device so that higher forces might be applied by the belonging manipulator modules on the workpiece to be handled.

In another embodiment of the invention at least two guiding rails with at least one moveable mounted skid each are nested around a common rail and at least one of those skids is in addition moveable mounted on the common rail, whereas preferably the working ranges of the skids overlap. So a variety of highly complex workpieces can be handled by a flexible tooling made of standardized actuator modules with increased stiffness.

According to another variant of the invention at least two skids or already coupled skids are coupled together and this coupled arrangement of skids is driven by one common actuator along the belonging guide rails. The number of required actuators is once more reduced in an advantageous way, but of course this reduction of flexibility has to be in line with the shape of objects to be gripped.

In a certain embodiment of the invention the actual position of a moveable mounted skid on the guide rail and/or the position of a manipulator module and/or the position of a tool interface is ascertainable with a sensor device. The control of the movements of the tooling device respectively its manipulator modules is simplified therewith. A sensor could be for example an impulse counter for a stepping motor which is used as actuator. But also a slide resistance or an optical sensor are suitable sensors.

Preferably the tooling device according to the invention is mounted on an industrial robot. An industrial robot is a manipulator with for example six degrees of freedom in movement. So the whole tooling device can be moved by the industrial robot within its working range, for example in a radius of 3m around its base, in any orientation. A total of three degrees of freedom in movement of the tooling device including a gripper tools mounted thereon is sufficient for a high flexibility of a system with robot and tooling device. In this case nine degrees of freedom in movement are provided in total.

In a certain embodiment of the invention the movement of the robot and the movement of the tooling device are controlled by the same controlling device. This may also include the movement of a gripper tool which can be attached to the tool interface and which might provide an own actuator driven degree of freedom in movement. The coordination of the overall movements of the whole system is easier then.

The problem is also solved by a method for gripping a workpiece with a tooling device according to the invention, whereas the manipulator modules are pre-positioned in a pre-tilt position before moving to the final gripping position. The pre-positioning can be done preferably while a robot or other manipulator moves the empty tooling device in direction of the workpiece to be gripped. When the tooling device itself is in its final position relative to the workpiece the required movements of the manipulator modules are rather low so that the speed of the gripping process is increased. The pre-tilt position should be chosen that the tooling device with the manipulator modules in pre-tilt position can just be moved over the workpiece to be gripped without any collision.

Further advantageous embodiments of the invention are mentioned in the dependent claims.

The invention will now be further explained by means of an exemplary embodiment and with reference to the accompanying drawings, in which:
- Figure 1: shows a top-view on a first tooling device,
- Figure 2: shows a manipulator module in a 3D view,
- Figure 3: shows an exemplary first guide rail with skids in a 3D view,
- Figure 4: shows an exemplary second guide rail with moveable manipulator modules in a 3D view,
- Figure 5: shows an exemplary third guide rail with moveable manipulators in different positions from a top-view and
- Figure 6: shows a schematic second tooling device from a top-view.

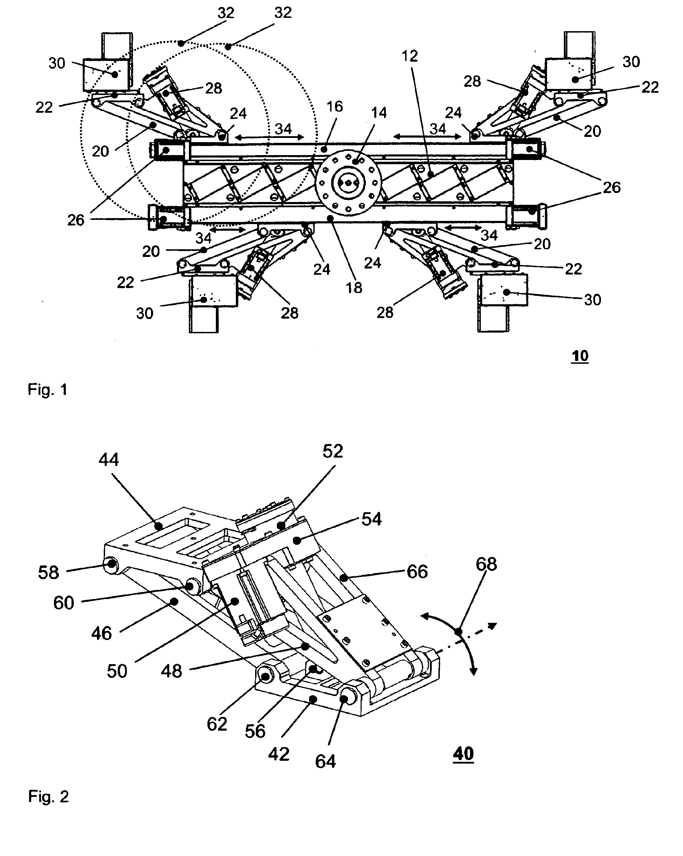

Fig. 1 shows a top-view on a first tooling device 10. Two parallel and opposed guide rails 16 and 18 are attached to a base unit 12 which is foreseen to be connected to an industrial robot with the connection interface 14. On each guide rail 16, 18 two moveable manipulator modules 24 are mounted, which can linearly become moved along those rails, what is marked with an arrow with reference sign 34. Actuators 26 are attached to the base unit 12 to drive this linear movement individually for each manipulator module 20, whereas a not shown spindle drive is foreseen as movement transmission interface in between each actuator 26 and each manipulator module 20.

Each manipulator module 20 comprises on its first end a moveable flat skid 24 and on its second end a flat tooling interface 22, which is foreseen to attach a gripping tool 30 thereon. The tool interface 22 is moveable along a circular path 32 around the related skid 24. Since the degree of freedom in movement of the manipulator module 20 is realized by a truss structure in the shape of a tiltable parallelogram two circular paths 32 are shown whereon the related two pivots of the tooling interface 22 are moveable, so that the tooling interface is always in parallel to the belonging skid 24.

This circular movement 32 of each tooling interface 22 is driven by an actuator 28, in this case an electric motor. The gripping tool 30 preferably provides at least one degree of freedom in movement, in this case in the same direction than the axis of rotation of the circular movement 32. So it is possible - when also including the linear movement of the manipulator module 20 itself - to position the tool interface 22 in any coordinate within a flat virtual movement plane and to adjust the tip of the gripper tool 30 upright to this plane.

Figure 2 shows a manipulator module 40 in a 3D view. On a flat skid 42, which comprises some not shown slide bearings for the moveable connection to a not shown guide rail, two parallel trusses 46, 48 are mounted pivotable around the bearings 62 and 64. On the opposed sides of the trusses 46 and 48 a flat connection interface 44, which is very similar to the tool interface 22 in Fig. 1, is connected with the two bearings 58, 60. The parallelogram shaped truss structure is tiltable around the belonging bearings 60, 62, 64, 66, what is indicated with the arrow 68.

The tilting motion is driven by the actuator 50, in this case an electric motor, which is mounted on a leverage truss 66 of the truss structure. The transmission interface for the movement of the actuator 50 is a spindle drive 52 that's one end is connected with the shaft joint 56 on the skid 42. The mechanical connection of the actuator 50 and the spindle drive 52 is realized with the coupling module 54 that comprises a non visible transmission belt.

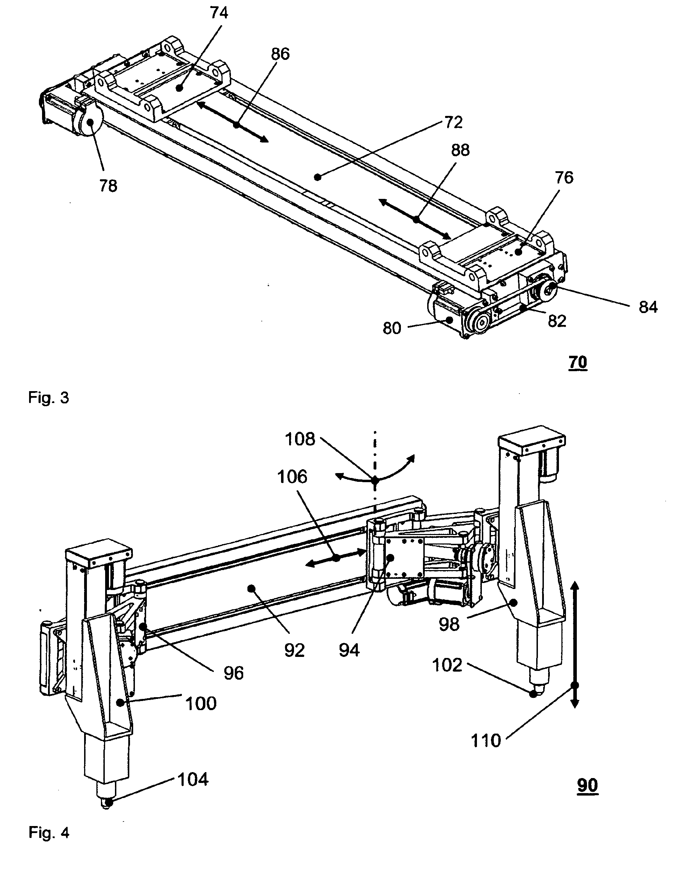

Figure 3 shows an exemplary first guide rail 72 with skids 74, 76 in a 3D view 70. The guide rail 72 comprises two separate guide notches for the connection to the linear moveable skids 74, 76. The first skid 74 is driven by the actuator 78 and the second skid 76 is independently driven by the actuator 80 that's rotary movement is transmitted to the spindle drive 84 with the transmission belt 82. Only one end of the spindle drive 84 is visible, whereas the spindle itself extends - not visible - to the other side of the guide rail 72. A non-visible form-locking thread which surrounds a cross section of the spindle and which is attached to the second skid 76 converts the rotary movement of the spindle into a linear movement of the skid 76. So it is possible to move both skids 74, 76 independently of each other along the guide rail 72 as indicated with the arrows 86 and 88. The skids 74 and 76 correspond mainly to the skid 42 of the manipulator module 40, what is shown in Fig. 2.

Fig. 4 shows an exemplary second guide rail 92 with two moveable manipulator modules 94 and 96 in a 3D view 90. This can be assumed as a combination of the guide rail 70 shown in Fig 3, two manipulator modules 40 according to Fig. 2 mounted thereon and two gripper tools 98 and 100 mounted on the belonging manipulator modules 94 and 96.

The gripper tool 98 which is identical to the gripper tool 100 comprises the counterpart interface to the connection interface of the manipulator module 94. The gripper tool 98 comprises an actuator for driving the gripping tip 102 up and down in direction of the arrow 110. The gripping tip 102 might be a cone shaped end of a round bar but it is also thinkable that it is a suction cup or a clamping device with an additional actuator. So it is ensured that workpieces such as platforms for cars securely can be handled with the tooling device and its attached gripper tools. Of course it is also thinkable that the gripping tool 98 provides more than this single up- / down degree of freedom in movement.

The arrow 108 indicates the degree of freedom in movement of the manipulator module 94 due to its tilting motion and the arrow 106 indicates the degree of freedom in movement due to the linear movement along the guide rail 92. Together with the degree of freedom in movement 110 due to the up and down movement of the gripping tip 102 a total of three degrees of freedom in movement is provided for the gripping tip 102 whereas the gripping tip 104 is of course comparable.

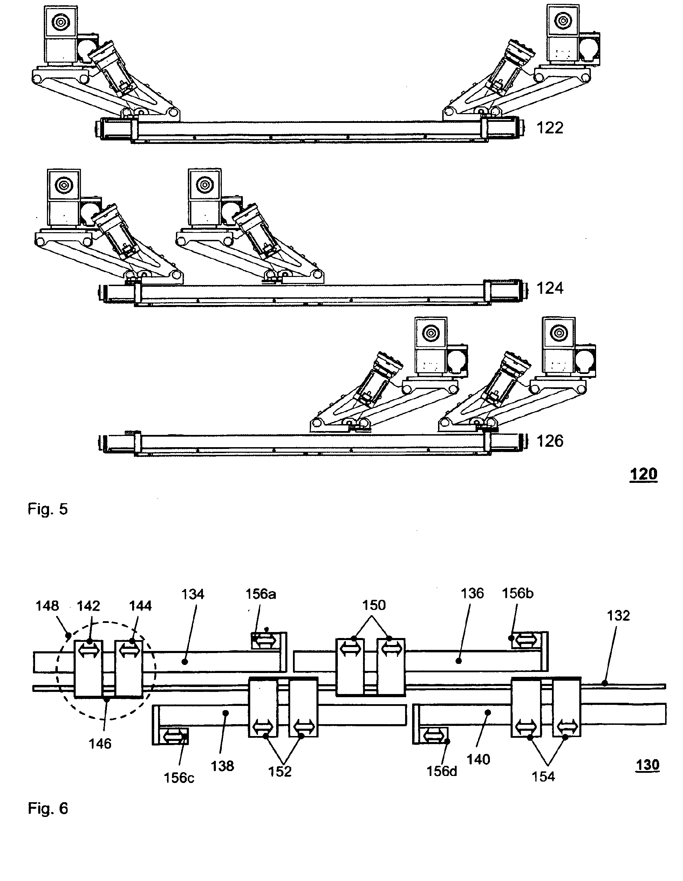

Figure 5 shows an exemplary third guide rail with two moveable manipulators in different positions from a top-view 120. This arrangement is comparable to the arrangement shown in fig. 4. Those several positions indicate the high flexibility and the overlapping working ranges of the tooling device according to the invention.

In the first position 122 both manipulator modules are located on the opposed sides of the guide rail with different degrees of tilting. In the second position 124 both manipulator modules are moved to one side of the guide rail whereas they have the same degree of tilting. In the third position 126 both manipulator modules are moved to the opposed side of the guide rail with a different degree of tilting.

Figure 6 shows a schematic second tooling device from a top-view. This tooling device comprises five parallel guide rails 132, 134, 136, 138, 140. The center rail 132 extends over the whole length of the third tooling device, whereas the two outer guide rails 134, 136 are arranged in a line on the first side of the center rail 132, and whereas the two other outer guide rails 138, 140 are arranged in a line on the opposed side of the center rail 132. All outer rails are provided with one actuator 15a-d. each for the linear movement of the belonging skid mounted thereon. It is also thinkable, that for example also skid 148 and skid 152 are also mechanically coupled and driven by a common actuator 156a, whereas actuator 156c would not exist in this case.

A coupled skid 148 is moveable mounted on the first outer rail 134 and in addition on the center rail 132. Due to the mounting on two parallel guide rails the mechanical stability of the guided skid 148 is increased and it is possible to apply a higher mechanical force with one or more not shown manipulator devices. The coupled skid 148 comprises two separate skids 142 and 144 which are mechanically coupled over the coupling device 146, which could be in the easiest case a screw.

In this example only the separate skid 142 is driven by a non visible spindle drive which is integrated in the first guide rail 134. The second separate skid 144 is not actively driven by a dedicated drive but it is driven due to the coupling with the other separate skid 142. The center rail 132 does also not comprise any drive for any of the skids which are moveable mounted thereon. The advantage of this constellation is that for example two independently acting manipulator modules mounted on the coupled skid are moveable along the same rail 134 with a common drive. This causes indeed a certain loss of flexibility of the second tooling device 130. Nevertheless there are certain types of workpieces to be handled thinkable, for those this constellation does not mean a loss of flexibility.

There are three other comparable coupled skids 150, 152 respectively 154, which are also mounted on a dedicated outer rail 136, 138 respectively 140 and which are all mounted on the same center rail 132.

Due to an offset of the longitudinal extension of opposed outer guide rails 134, 136 on one side and 138, 140 on the opposed side it is in principal possible, that each coupled skid is moveable along the whole longitudinal extension of its dedicated outer guide rail. Due to the common guidance of all coupled skids on the center rail 132 some restrictions have to be observed.

### List of reference signs

| | |
|---|---|
| 10 | first tooling device |
| 12 | base unit |
| 14 | connection interface to manipulator |
| 16 | first guide rail of first tooling device |
| 18 | second guide rail of first tooling device |
| 20 | manipulator module of first tooling device |
| 22 | tool interface of manipulator module |
| 24 | moveable skid of first manipulator module |
| 26 | first actuator of first tooling device |
| 28 | second actuator of first tooling device |
| 30 | tool of first tooling device |
| 32 | movement range of manipulator device of first gripper tool |
| 34 | moving direction of manipulator modules |
| 40 | manipulator module |
| 42 | skid of manipulator module |
| 44 | connection interface of manipulator module |
| 46 | first truss of manipulator module |
| 48 | second truss of manipulator module |
| 50 | actuator of manipulator module |
| 52 | spindle drive |
| 54 | coupling module |
| 56 | shaft joint |
| 58 | first bearing |
| 60 | second bearing |
| 62 | third bearing |
| 64 | forth bearing |
| 66 | leverage truss |
| 68 | rotating direction |
| 70 | exemplary first guide rail with skids |
| 72 | first guide rail |
| 74 | first skid on first guide rail |
| 76 | second skid on first guide rail |
| 78 | actuator for first skid on first guide rail |
| 80 | actuator for second skid on first guide rail |
| 82 | belt |
| 84 | spindle drive for second skid |
| 86 | movement direction of first skid on first rail |
| 88 | movement direction of second skid on first rail |
| 90 | exemplary second guide rail with moveable manipulator modules |
| 92 | second guide rail |
| 94 | first manipulator module on second guide rail |
| 96 | second manipulator module on second guide rail |
| 98 | first tool mounted on second end first manipulator module |
| 100 | second tool mounted on second end second manipulator module |
| 102 | gripping tip of first tool |
| 104 | gripping tip of second tool |
| 106 | movement direction of first manipulator module on second rail |
| 108 | rotation movement provided by first manipulator module |
| 110 | up-down movement direction provided by first tool |
| 120 | exemplary third guide rails with moveable manipulator modules |
| 122, 124, 126 | different states |
| 130 | second tooling device |
| 132 | center rail |
| 134 | first rail of second tooling device |
| 136 | second rail of second tooling device |
| 138 | first rail of second tooling device |
| 140 | forth rail of second tooling device |
| 142 | first skid on third tooling device |
| 144 | second skid on third tooling device |
| 146 | coupling device for skids |
| 148 | first coupled skids |
| 150 | second coupled skids |
| 152 | third coupled skids |
| 154 | forth coupled skids |
| 156a-d | actuators for linear movement |

## Claims

1. Tooling device (10, 130) which is foreseen to be connected with a manipulator, comprising a base unit (12) and at least two manipulator modules (20, 40, 94, 96) with a first and a second end each, wherein at least one degree of freedom in movement (32, 68, 108) is provided in between both ends of each manipulator module (20, 40, 94, 96), wherein the first end is connected with the base unit (12), wherein a tool interface (22, 44) is provided at the second end, wherein the tool interfaces (22, 44) are moveable independently each from each other relative to the base unit (12), *wherein* at least one manipulator module (20, 40, 94, 96) is linear moveable (34, 86, 88, 106) on its first end relative to the base unit (12) *on a skid (24, 42, 74, 76, 142, 144, 148, 150, 152, 154) along a guide rail (16, 18, 72, 92, 132, 134, 136, 138, 140) which is part of the base unit (12), wherein said at least one degree of freedom in movement (32, 68, 108) of the manipulator module (20, 40, 94, 96) is realized by two mechanically parallel connected tiltable truss structures (46, 48) in the shape of a parallelogram which are directly or indirectly connected to the skid (24, 42, 74, 76, 142, 144, 148, 150, 152, 154) and wherein at least one actuator (28, 50) for tilting motion of the manipulation module foreseen which is linear moveable relative to the base unit (12) together with the manipulator module (20, 40, 94, 96).*

2. Tooling device according to claim 1, **characterized in that** actuators (26, 28, 50, 78, 80) are provided for linear moving (86, 88, 106) the manipulator modules (20, 40, 94, 96) and/or for driving its at least one degree of freedom in movement (32, 68, 108).

3. Tooling device according to *claim 1 or claim 2*, **characterized in that** at least two manipulator modules (20, 40, 94, 96) are moveable on a separate or coupled skid each (24, 42, 74, 76, 142, 144, 148, 150, 152, 154) on the same guide rail (16, 18, 72, 92, 132, 134, 136, 138, 140) independently each from each other.

4. Tooling device according to claim 3, **characterized in that** the at least two manipulator modules (20, 40, 94, 96) are mechanically coupled (146) and driven by a common actuator (26, 78, 80) along a common guide rail (16, 18, 72, 92, 132, 134, 136, 138, 140).

5. Tooling device according to any of *the proceeding claims,* **characterized in that** at least one actuator (26, 28, 78, 80) is coupled with a spindle drive (52, 84) with shaft joint.

6. Tooling device according to any of the proceeding claims, **characterized in that** at least two guide rails in parallel (14, 16, 132, 134, 136, 138, 140) with at least one related skid each (24, 42, 74, 76, 142, 144, 148, 150, 152, 154) moveable independently each from each other are foreseen, whereas the two guide rails overlap at least along a part of their longitudinal extension.

7. Tooling device according to any of the proceeding claims, **characterized in that** at least two guide rails in parallel (14, 16, 132, 134, 136, 138, 140) with at least a common moveable mounted skid (142, 144, 148, 150, 152, 154) are foreseen, whereas the two guide rails overlap at least along a part of their longitudinal extension.

8. Tooling device according to claim 7, **characterized in that** at at least two guiding rails (134, 136, 138, 140) with at least one moveable mounted skid each (148, 150, 152, 154) are nested around a common rail (132) and that at least one skid (148, 150, 152, 154) is in addition moveable mounted on the common rail (132).

9. Tooling device according to claim 8, **characterized in that** at least two skids (142, 144) are coupled together and that this coupled arrangement of skids is driven by one common actuator along the belonging guide rails.

10. Tooling device according to any of the proceeding claims, **characterized in that** a *sensor device is foreseen for ascertaining* the actual position of a moveable mounted skid (24, 42, 74, 76, 142, 144, 148, 150, 152, 154) on the guide rail (16, 18, 72, 92, 132, 134, 136, 138, 140) and/or the position of a manipulator module (20, 40, 94, 96) and/or the position of a tool interface (22, 44).

11. *Tooling system comprising a tooling device according to any of the proceeding claims and a robot, where it is mounted on.*

## Patentansprüche

1. Werkzeugbereitstellungsvorrichtung (10, 130), die vorgesehen ist, mit einem Manipulator verbunden zu werden, mit einer Basiseinheit (12) und mindestens zwei Manipulatormodulen (20, 40, 94, 96) jeweils mit einem ersten und einem zweiten Ende, wobei mindestens ein Bewegungsfreiheitsgrad (32, 68, 108) zwischen beiden Enden eines jeden Manipulatormoduls (20, 40, 94, 96) bereitgestellt ist, wobei das erste Ende mit der Basiseinheit (12) verbunden ist, wobei an dem zweiten Ende eine Werkzeuganschlussstelle (22, 44) bereitgestellt ist, wobei die Werkzeuganschlussstellen (22, 44) unabhängig voneinander mit Bezug auf die Basiseinheit (12) bewegbar sind, wobei mindestens ein Manipulatormodul (20, 40, 94, 96) auf seinem ersten Ende mit Bezug auf die Basiseinheit (12) auf einem Schlitten (24, 42, 74, 76, 142, 144, 148, 150, 152, 154) entlang einer Führungsschiene (16, 18, 72, 92, 132, 134, 136, 138, 140) linear bewegbar (34, 86, 88, 106) ist, die Teil der Basiseinheit (12) ist, wobei der mindestens eine Bewegungsfreiheitsgrad (32, 68, 108) des Manipulatormoduls (20, 40, 94, 96) durch zwei mechanisch parallel verbundene kippbare Strebenstrukturen (46, 48) in der Form eines Parallelogramms realisiert ist, die unmittelbar oder mittelbar mit dem Schlitten (24, 42, 74, 76, 142, 144, 148, 150, 152, 154) verbunden sind, und wobei mindestens ein Aktuator (28, 50) für die Kippbewegung des Manipulationsmoduls vorgesehen ist, der mit Bezug auf die Basiseinheit (12) zusammen mit dem Manipulatormodul (20, 40, 94, 96) linear bewegbar ist.

2. Werkzeugbereitstellungsvorrichtung nach Anspruch 1, **dadurch gekennzeichnet, dass** Aktuatoren (26, 28, 50, 78, 80) für die lineare Bewegung (86, 88, 106) der Manipulatormodule (20, 40, 94, 96) und/oder für das Antreiben seines mindestens einen Bewegungsfreiheitsgrades (32, 68, 108) bereitgestellt sind.

3. Werkzeugbereitstellungsvorrichtung nach Anspruch 1 oder Anspruch 2, **dadurch gekennzeichnet, dass** mindestens zwei Manipulatormodule (20, 40, 94, 96) jeweils auf einem separaten oder gekoppelten Schlitten (24, 42, 74, 76, 142, 144, 148, 150, 152, 154) auf der gleichen Führungsschiene (16, 18, 72, 92, 132, 134, 136, 138, 140) unabhängig voneinander bewegbar sind.

4. Werkzeugbereitstellungsvorrichtung nach Anspruch 3, **dadurch gekennzeichnet, dass** die mindestens zwei Manipulatormodule (20, 40, 94, 96) mechanisch gekoppelt sind (146) und durch einen gemeinsamen Aktuator (26, 78, 80) entlang einer gemeinsamen Führungsschiene (16, 18, 72, 92, 132, 134, 136, 138, 140) angetrieben werden.

5. Werkzeugbereitstellungsvorrichtung nach einem der vorhergehenden Ansprüche, **dadurch gekennzeichnet, dass** mindestens ein Aktuator (26, 28, 78, 80) mit einem Spindelantrieb (52, 84) mit Wellenverbindung gekoppelt ist.

6. Werkzeugbereitstellungsvorrichtung nach einem der vorhergehenden Ansprüche, **dadurch gekennzeichnet, dass** mindestens zwei Führungsschienen, jede parallel (14, 16, 132, 134, 136, 138, 140) zu mindestens einem zugehörigen Schlitten (24, 42, 74, 76, 142, 144, 148, 150, 152, 154), unabhängig voneinander bewegbar vorgesehen sind, wobei sich die zwei Führungsschienen mindestens entlang eines Teiles ihrer Längsausdehnung überdecken.

7. Werkzeugbereitstellungsvorrichtung nach einem der vorhergehenden Ansprüche, **dadurch gekennzeichnet, dass** mindestens zwei Führungsschienen parallel (14, 16, 132, 134, 136, 138, 140) zu mindestens einem gemeinsam bewegbar gelagerten Schlitten (142, 144, 148, 150, 152, 154) vorgesehen sind, wobei sich die zwei Führungsschienen mindestens entlang eines Teiles ihrer Längsausdehnung überdecken.

8. Werkzeugbereitstellungsvorrichtung nach Anspruch 7, **dadurch gekennzeichnet, dass** mindestens zwei Führungsschienen (134, 136, 138, 140), jede mit mindestens einem bewegbar gelagerten Schlitten (148, 150, 152, 154), um eine gemeinsame Schiene (132) herum ineinander geschachtelt sind und dass mindestens ein Schlitten (148, 150, 152, 154) zusätzlich auf der gemeinsamen Schiene (132) bewegbar gelagert ist.

9. Werkzeugbereitstellungsvorrichtung nach Anspruch 8, **dadurch gekennzeichnet, dass** mindestens zwei Schlitten (142, 144) aneinander gekoppelt sind und dass diese gekoppelte Anordnung von Schlitten durch einen gemeinsamen Aktuator entlang der zugehörigen Führungsschienen angetrieben wird.

10. Werkzeugbereitstellungsvorrichtung nach einem der vorhergehenden Ansprüche, **dadurch gekennzeichnet, dass** eine Sensorvorrichtung zum Ermitteln der Istposition eines auf der Führungsschiene (16, 18, 72, 92, 132, 134, 136, 138, 140) bewegbar gelagerten Schlittens (24, 42, 74, 76, 142, 144, 148, 150, 152, 154) und/oder der Position eines Manipulatormoduls (20, 40, 94, 96) und/oder der Position einer Werkzeuganschlussstelle (22, 44) vorgesehen ist.

11. Werkzeugbereitstellungssystem mit einer Werkzeugbereitstellungsvorrichtung nach einem der vorhergehenden Ansprüche und ein Roboter, auf dem es angebracht ist.

## Revendications

1. Dispositif d'outillage (10, 130) prévu pour être connecté à un manipulateur, comprenant une unité de base (12) et au moins deux modules de manipulateur (20, 40, 94, 96) avec une première et une deuxième extrémité chacun, au moins un degré de liberté de mouvement (32, 68, 108) étant prévu entre les deux extrémités de chaque module de manipulateur (20, 40, 94, 96), la première extrémité étant connectée à l'unité de base (12), une interface d'outil (22, 44) étant prévue au niveau de la deuxième extrémité, les interfaces d'outil (22, 44) pouvant être déplacées indépendamment l'une de l'autre par rapport à l'unité de base (12), au moins un module de manipulateur (20, 40, 94, 96) étant déplaçable linéairement (34, 86, 88, 106) sur sa première extrémité par rapport à l'unité de base (12) sur un patin (24, 42, 74, 76, 142, 144, 148, 150, 152, 154) le long d'un rail de guidage (16, 18, 72, 92, 132, 134, 136, 138, 140) qui fait partie de l'unité de base (12), ledit au moins un degré de liberté de mouvement (32, 68, 108) du module de manipulateur (20, 40, 94, 96) étant réalisé par deux structures en treillis inclinables connectées mécaniquement en parallèle (46, 48) sous la forme d'un parallélogramme, lesquelles structures sont connectées directement ou indirectement au patin (24, 42, 74, 76, 142, 144, 148, 150, 152, 154) et au moins un actionneur (28, 50) pour un mouvement d'inclinaison du module de manipulateur étant prévu, lequel peut être déplacé linéairement par rapport à l'unité de base (12) conjointement avec le module de manipulateur (20, 40, 94, 96).

2. Dispositif d'outillage selon la revendication 1, **caractérisé en ce que** des actionneurs (26, 28, 50 78, 80) sont prévus pour le déplacement linéaire (86, 88, 106) des modules de manipulateur (20, 40, 94, 96) et/ou pour entraîner leur au moins un degré de liberté de mouvement (32, 68, 108).

3. Dispositif d'outillage selon la revendication 1 ou la revendication 2, **caractérisé en ce qu'**au moins deux modules de manipulateur (20, 40, 94, 96) peuvent être déplacés sur un patin séparé ou accouplé chacun (24, 42, 74, 76, 142, 144, 148, 150, 152, 154) sur le même rail de guidage (16, 18, 72, 92, 132, 134, 136, 138, 140) indépendamment l'un de l'autre.

4. Dispositif d'outillage selon la revendication 3, **caractérisé en ce que** les au moins deux modules de manipulateur (20, 40, 94, 96) sont accouplés mécaniquement (146) et entraînés par un actionneur commun (26, 78, 80) le long d'un rail de guidage commun (16, 18, 72, 92, 132, 134, 136, 138, 140).

5. Dispositif d'outillage selon l'une quelconque des revendications précédentes, **caractérisé en ce qu'**au moins un actionneur (26, 28, 78, 80) est accouplé à un entraînement à broche (52, 84) avec un joint d'arbre.

6. Dispositif d'outillage selon l'une quelconque des revendications précédentes, **caractérisé en ce qu'**au moins deux rails de guidage en parallèle (14, 16, 132, 134, 136, 138, 140) avec au moins un patin associé chacun (24, 42, 74, 76, 142, 144, 148, 150, 152, 154) déplaçables indépendamment l'un de l'autre sont prévus, tandis que les deux rails de guidage se chevauchent au moins le long d'une partie de leur extension longitudinale.

7. Dispositif d'outillage selon l'une quelconque des revendications précédentes, **caractérisé en ce qu'**au moins deux rails de guidage en parallèle (14, 16, 132, 134, 136, 138, 140) avec au moins un patin commun monté de manière déplaçable (142, 144, 148, 150, 152, 154) sont prévus, tandis que les deux rails de guidage se chevauchent au moins le long d'une partie de leur extension longitudinale.

8. Dispositif d'outillage selon la revendication 7, **caractérisé en ce qu'**au moins deux rails de guidage (134, 136, 138, 140) avec au moins un patin monté de manière déplaçable chacun (148, 150, 152, 154) sont emboîtés autour d'un rail commun (132) et **en ce qu'**au moins un patin (148, 150, 152, 154) est en outre monté de manière déplaçable sur le rail commun (132).

9. Dispositif d'outillage selon la revendication 8, **caractérisé en ce qu'**au moins deux patins (142, 144) sont accouplés l'un à l'autre et **en ce que** cet agencement accouplé de patins est entraîné par un actionneur commun le long des rails des guidage associés.

10. Dispositif d'outillage selon l'une quelconque des revendications précédentes, **caractérisé en ce qu'**un dispositif de capteur est prévu pour établir la position actuelle d'un patin monté de manière déplaçable (24, 42, 74, 76, 142, 144, 148, 150, 152, 154) sur le rail de guidage (16, 18, 72, 92, 132, 134, 136, 138, 140) et/ou la position d'un module de manipulateur (20, 40, 94, 96) et/ou la position d'une interface d'outil (22, 44).

11. Système d'outillage comprenant un dispositif d'outillage selon l'une quelconque des revendications précédentes et un robot, sur lequel il est monté.
